# EUROPEAN PATENT SPECIFICATION

(11) **EP 3 894 672 B1**
(45) Date of publication and mention of the grant of the patent: **02.10.2024**
(21) Application number: 19841705.7
(22) Date of filing: 08.11.2019
(51) Int. Cl.: F16K 11/12, F16K 11/24, F16K 31/00, F01L 9/21, F01L 9/40, F01L 9/20

(54) **METHOD AND DEVICE FOR ELECTRICALLY CONTROLLING A VALVE ACTUATOR IN AN INTERNAL COMBUSTION ENGINGE**
VERFAHREN UND VORRICHTUNG ZUR ELEKTRISCHEN ANSTEUERUNG EINES VENTILAKTUATORS IN EINER BRENNKRAFTMASCHINE
PROCÉDÉ ET DISPOSITIF DE COMMANDE ÉLECTRIQUE D'UN BOUTON-POUSSOIR DANS UN MOTEUR À COMBUSTION INTERNE

(30) Priority: 10.12.2018 SE 1851534
(43) Date of publication of application: 20.10.2021
(73) Proprietor: Hedman Ericsson Patent AB, 642 95 Flen (SE)
(72) Inventor: HEDMAN, Mats, 649 91 SPARREHOLM (SE)
(74) Representative: Groth & Co. KB
(86) International application number: PCT/SE2019/051132
(87) International publication number: WO 2020/022949

(56) References cited:
- US-A- 5 074 259
- US-A1- 2007 044 741
- US-A1- 2007 044 741
- US-A1- 2009 151 666
- US-B1- 6 302 069
- US-B1- 6 354 253

## Description

### TECHNICAL FIELD

The present invention concerns a method and a device for a freely controllable electrically activated valve actuator for controlling the gas flow in 2- or 4-stroke engines.

### BACKGROUND

Freely controllable valves allow improved efficiency and substantially reduced emissions, i.e. cleaner exhaust gases. Valve actuators for such freely controllable valves may be pneumatically or hydraulically activated.

Today's valve actuators for freely controllable engine valves often have high energy consumption and/or complex construction and/or have difficulties in quickly closing and opening the valve, i.e. to achieve a short duration.

### SUMMARY

The purpose of the invention is to achieve a new actuator technology in the form of an electrically controlled electromechanical valve actuator which is principally simple in its construction, energy efficient and which is capable of quickly opening and closing an engine valve in a cylinder head of an engine. This purpose is achieved by providing the invention with the features described in the patent claims. Two relevant prior art documents with electromechanical valve actuators are US 6 302 069 B1 and US 2009/151666 A1.

According to a first aspect of the invention, there is provided a method for electrically controlling a valve actuator in a 2-stroke or 4-stroke combustion engine, where the actuator comprises a first solenoid with a first plunger and a second solenoid with a second plunger. The engine has at least one cylinder with at least one freely controllable engine valve comprising a valve disc with associated valve stem and a valve spring and where air is introduced, or exhaust gases are evacuated from, a combustion chamber past a lower part of the valve stem with the valve disc via at least one channel in the cylinder, wherein the valve actuator is activatable to open the engine valve. The method is characterized in that both the first and the second solenoid are activated during opening of the engine valve.

The first and second plungers together act on the valve stem during initial opening movement of the engine valve.

The first and second solenoids are arranged in series, preferably such that the first plunger, during the initial opening movement of the engine valve, acts on the second plunger, which in turn acts on the valve stem. The valve spring is preferably arranged to keep the engine valve closed, i.e. to apply a force on the engine valve in such a direction that the valve disc is pressed in the direction of the valve seat. The solenoids together act on the valve during opening to overcome the force of the valve spring.

The technology involves using at least two solenoids and an engine valve spring which in a traditional manner keeps an engine valve closed and using a here-called "soft hammer effect" when the engine valve is to be opened.

The first and second plungers are each provided with a stop defined as the position at which respective solenoid exerts maximum force on the plunger.

In embodiments, the for instance two solenoids are arranged in series with each other, wherein the first solenoid has a short stroke and a high strength already at activation compared with the second solenoid which has a long stroke and is weak at activation. In other words, the first solenoid has a shorter stroke and higher strength that the second solenoid. The strengths of both solenoids, i.e. the force with which respective plunger may act, increases as the respective plunger is moved further into the magnetic field until they are completely surrounded in their respective magnetic field. The at least two solenoids are activated together. The plunger of the first solenoid pushes on the plunger of the second solenoid with a strong and even stronger force during its relatively short stroke, which thereby leads to the mentioned soft hammer effect. The plunger of the second solenoid is coupled to, or rests on, the valve stem of an engine valve and acts with pushing force thereon together with the plunger of the first solenoid. When the plunger of the first solenoid has reached its stop, the plunger of the second solenoid has reached sufficiently long into its magnetic field such that the plunger with strong and increasing force acts on the valve stem during further movement of the plunger towards the stop until the stop is reached when the engine valve is fully open.

A problem with using solenoids for opening engine valves is that they need to be strong to overcome the force of the mechanical spring, the engine valve spring, which keeps the valve closed. A disadvantage is that with high strength comes with great size and weight of the moving iron core, the plunger, whose force is to overcome the closing force of the engine valve spring. The weight of the iron core and the valve spring together with the force of the valve spring contravenes the possibility for a short duration, i.e. a short time from that the valve is closed until it is fully open and once again closed. In embodiments, the method comprises that, when the plunger of the first solenoid has reached its stop in the first solenoid, the plunger of the second solenoid continues to act on the valve stem until the plunger of the second solenoid has reached its stop in the second solenoid. In this embodiment, the mass of the iron core in the first solenoid will not be involved during a substantial part of the duration. By means of this method, a significantly short duration is made possible.

The invention is not departed from by placing another solenoid in series with the above described two solenoids. For example, an additional solenoid may be placed before the above mentioned first solenoid. Preferably, this solenoid has a substantially shorter stroke and is substantially stronger than the above mentioned first solenoid.

In embodiments, the first and/or the second solenoid is/are activated just before the engine valve reaches the valve seat, such that the closing movement is retarded. The activation is preferably of short duration, i.e. during a predetermined time period. The activation is preferably started at a predetermined time before the engine valve reaches the valve seat.

According to a second aspect of the invention, there is provided a device for electrically controlling a valve actuator in a 2-stroke or 4-stroke combustion engine, where the actuator comprises a first solenoid with a first plunger and a second solenoid with a second plunger, wherein the engine has at least one cylinder with at least one freely controllable engine valve comprising a valve disc with associated valve stem and a valve spring and where air is introduced, or exhaust gases are evacuated from, a combustion chamber past a lower part of the valve stem with the valve disc via at least one channel in the cylinder, wherein the valve actuator is arranged activatable to open the engine valve. The device is characterized in that both the first and second solenoid are activated during opening of the engine valve. In embodiments, the device is formed as an engine control system.

According to a third aspect of the invention, there is provided a 2-stroke or 4-stroke combustion engine comprising at least one cylinder with at least one freely controllable engine valve comprising a valve disc with associated valve stem and a valve spring, wherein air is introduced, or exhaust gases are evacuated from, a combustion space past a lower part of the valve stem with the valve disc via at least one channel in the cylinder.

The combustion engine also comprises a device according to the second aspect of the invention.

Above described embodiments of the method are applicable also as corresponding embodiments of the second and third aspects of the invention.

### BRIEF DESCRIPTION OF THE DRAWINGS

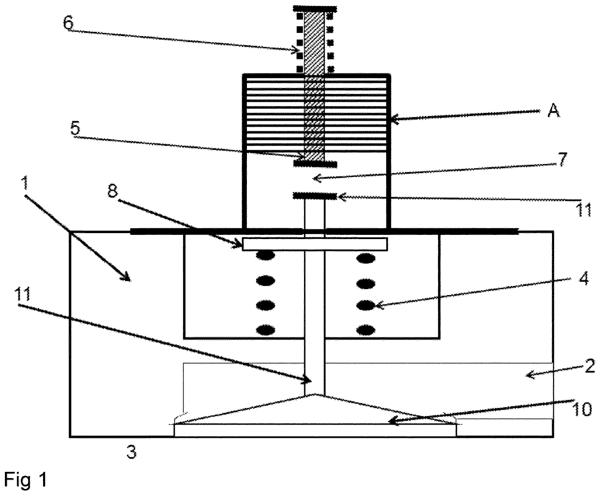

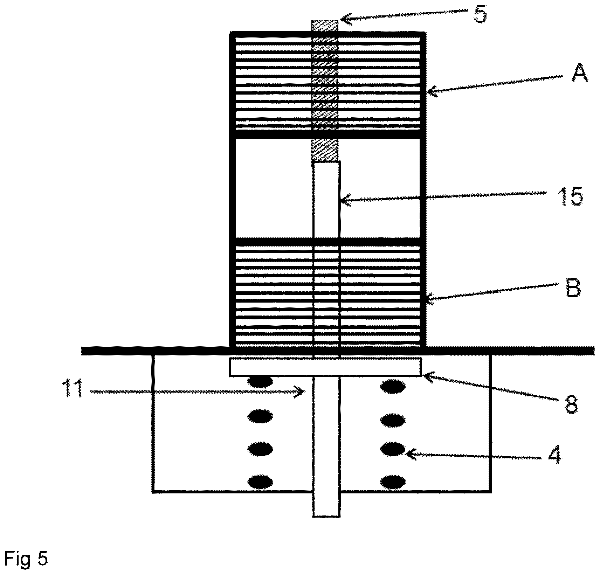

The invention shall now be described with embodiments, where figures 1-4 schematically show an actuator where an engine valve is opened using a so called "hammer effect" described in an earlier filed patent application. Thereafter, figures 5-10 relating to the present invention are described.

The reasons for first describing said figures 1-4 is to clarify the difference between the two inventions, the difference between opening an engine valve with "hammer effect" and "soft hammer effect". Furthermore, the description of figures 5-10 may be simplified while maintaining clarity.

### DETAILED DESCRIPTION

In the description below, it is assumed that there is a computer based engine control system with required sensors for crank angle degree and electronics for reading crank angle degree and controlling required solenoids and so on. These components therefore do not need to be described. This also applies for existing spark plugs, fuel injectors, combustion chambers, cylinder walls and piston.

Fig. 1 shows an initial position during turned-off engine with a partially cut view from the side of a cylinder head 1 with a channel 2 for introduction of air, with or without fuel, to, or evacuation of exhaust gases from, a combustion chamber 3 past a conventional valve disc 10. An engine valve consists of the valve disc with valve stem 11.

The engine valve is kept closed in a conventional manner using a spring 4, and a conventional spring washer 8 keeps the spring in place with certain pretension. Furthermore, a solenoid A with an iron core, plunger 5 is shown. A spring 6 retains the plunger 5 in a home position when the solenoid A is not activated. There is a distance 7, an acceleration distance, between the upper portion of the valve stem 11 and the lower portion of the plunger 5. Although not illustrated in the figure, it is understood that the plunger has a large mass. When the plunger is wholly or partially disposed in the solenoid, the portion of the plunger being in the solenoid is surrounded by a winding of copper wire. When electricity is fed to the winding, a magnetic field is generated which attracts or repels the plunger. In this case, the plunger is attracted by the surrounding magnetic field, but the opposite could be the case while still being within the scope of the invention. A plunger is provided with an existing stop in the solenoid, being a natural stop where its force is at its maximum. Although not illustrated, it is understood that such a stop is present.

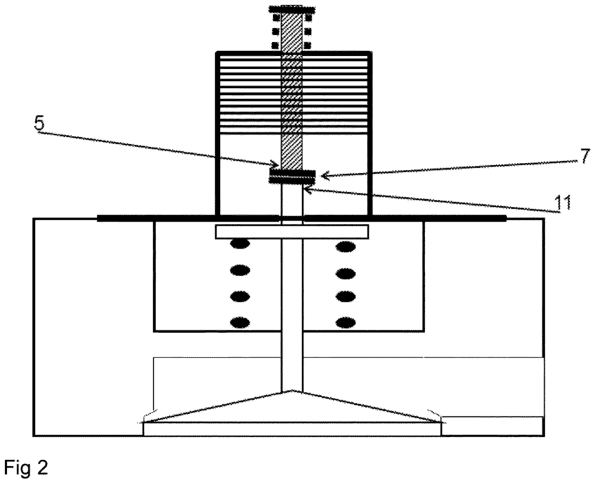

Fig. 2 shows the engine valve in a still closed position, for instance before the engine is started. The solenoid A has been activated and the plunger 5 has been accelerated while moving along distance 7 to the point where it hits the upper end of valve stem 11, whereby the kinetic energy of the plunger almost instantaneously is transferred to the valve stem, the "hammer effect".

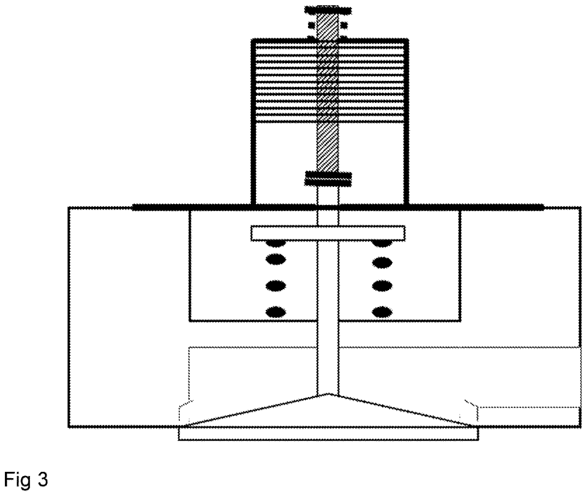

Fig. 3 shows the engine valve at the onset of an opening movement. The plunger has transferred most of its kinetic energy to the engine valve, whose movement towards an open position is undergoing heavy acceleration. The movement of the plunger continues for another short distance until the plunger reaches its natural stop in the solenoid.

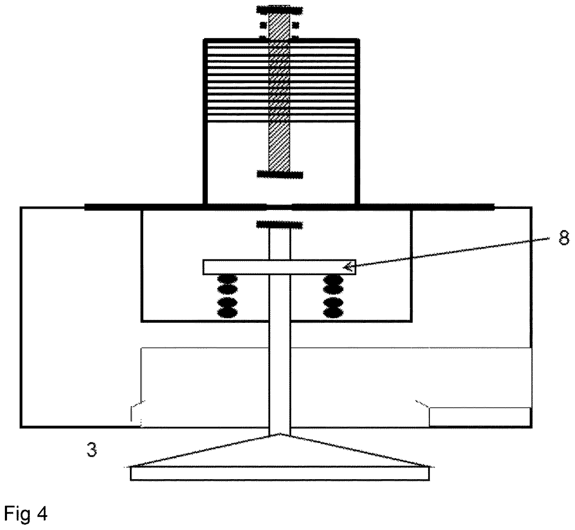

Fig. 4 shows the engine valve in fully open position where it turns. It is apparent that the only moving mass in this stage is the lowest possible mass consisting of the engine valve with its stem, spring washer and spring. The shortest possible duration is achieved. It is common that the moving mass of the spring is considered to constitute about one third of the spring weight.

Figures 5-9 thus concern the present invention, and the description of these figures can be simplified in that mainly added features and functions compared to figures 1-4 are explained. For instance, it is understood that the cylinder head, the valve disc etc. which is present in the above described figures are also present in the description of the figures below.

Fig. 5 shows two solenoids A and B. A plunger 5 is present in solenoid A and a plunger 15 is present in solenoid B. The plunger 5 rests on the plunger 15. The plunger 15 in turn rests on the spring washer 8 which is attached to the valve stem 11. The spring 4 is tensioned towards the spring washer and keeps the not shown valve disc in the not shown valve seat etc. It is understood that only an upper portion of the valve stem 11 is shown in fig. 5-9, i.e. the valve stem is shown cut off right below the actuator.

Solenoid B shall have a stroke which corresponds to how much the engine valve is to open (lift height), for instance 8 mm. The stroke of the plunger 15 is then 8 mm. Solenoid A shall have a stroke which is substantially shorter, for example 4 mm. The stroke of the plunger 5 is then 4 mm. Generally, the properties of solenoids are such that they are weak in the beginning of the plungers movement from the outskirt of the surrounding magnetic field and grows increasingly stronger as the plunger moves into the magnetic field to a stop in the solenoid when the plunger is completely surrounded by the magnetic field. Solenoid A has a short stroke and is, compared to solenoid B, strong already at the start of activation. Solenoid B alone could be activated to push the spring washer 8 by means of the plunger 15 and thereby open the engine valve in a certain time. But compared to A, B is weak during the start of activation and the opening is thus slow.

The invention is characterized in that by activating the solenoid together, the opening of the engine valve can take place faster and with less overall consumption of electric energy compared to if solenoid B alone would be used to open the engine valve.

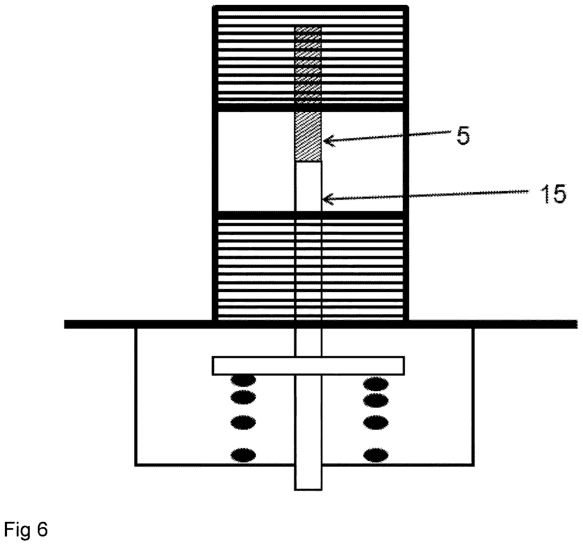

Fig. 6 shows that both solenoids A and B are activated. The spring 4 has at accelerating rate begun to compress since the overall force from plungers 5 and 15 act on the spring washer 8. The not shown valve disc has very quickly left the not shown valve seat. The strong and greatly increasing strength during the relative short movement of plunger 5 acting on the plunger 15 is here referred to as "soft hammer". The impact which takes place in the description of fig. 2, referred to as the "hammer effect" causes more noise and greater mechanical stress compared to the present invention.

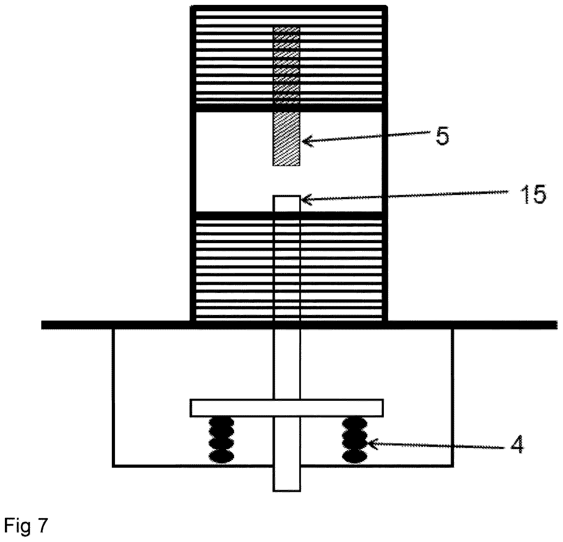

Fig. 7 shows a position where the plunger 5 has reached its stop in solenoid A, and the plunger can therefore not act on the plunger 15, which continues to be displaced in solenoid B until it has reached its stop. The spring 4 is compressed and the not shown engine valve has opened. Solenoid B is at its strongest and can keep the not shown engine valve in open position until it is to be closed.

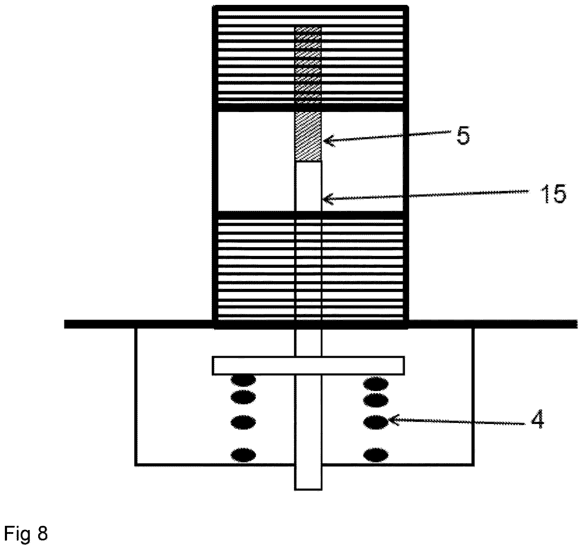

Fig. 8 shows the engine valve during a closing motion caused by deactivation of solenoid B. Spring 4 has to a certain extent expanded, and the plunger 15 has made contact with plunger 5 which has remained in the position shown in fig. 7. When said contact is made, the movement of the not shown engine valve is retarded and both plunger 5 and 15 continue together with the movement of the engine valve towards a fully closed position.

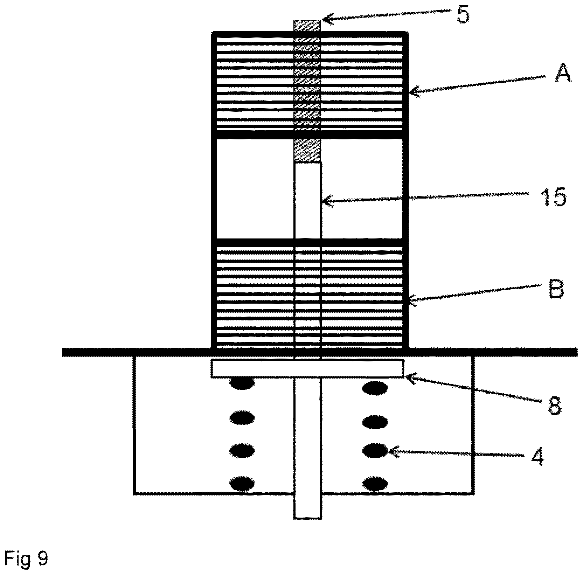

Fig. 9 shows the not shown engine valve in a closed position as in fig. 5. Just before completed closing, solenoid A has very briefly been activated and thereby retarded the closing movement with the result that the not shown valve disc lands in the not shown valve seat at a speed which does not cause damage to these details.

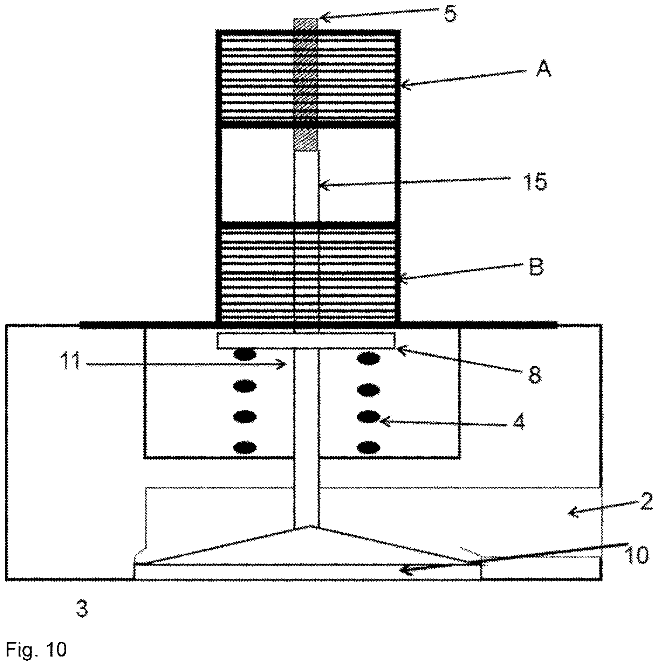

Fig. 10 shows the solenoids A and B with respective plunger 5, 15 in the same position as in fig. 5. The difference relative fig. 5 is that the valve actuator is shown here together with the cylinder head 1 with a channel 2, (upper portion of) a combustion chamber 3, a valve disc 10 and valve stem 11 in its entirety (in a corresponding manner as in fig. 1-4). Fig. 10 could also be considered illustrating parts of an embodiment of a combustion engine according to the third aspect of the invention.

The invention is not limited to the above described embodiments, but modifications can be made within the scope of the following claims.

## Claims

1. Method for electrically controlling a valve actuator in a 2-stroke or 4-stroke combustion engine, where the actuator comprises a first solenoid (A) with a first plunger (5) and a second solenoid (B) with a second plunger (15), wherein said solenoids (A, B) are arranged in series with each other, wherein the engine has at least one cylinder (1) with at least one freely controllable engine valve comprising a valve disc (10) with associated valve stem (11) and a valve spring (4) arranged to keep the valve closed, wherein air is introduced, or exhaust gases are evacuated from, a combustion chamber past a lower part of the valve stem with the valve disc via at least one channel (2) in the cylinder, wherein the valve actuator is activatable to open the engine valve by overcoming the closing force of said valve spring, wherein said first and second plunger are each provided with a stop defined as the position at which the force of the respective solenoid on the plunger is at its maximum, wherein the method comprises opening the valve by activating both the first and the second solenoid such that the plungers of the first and second solenoids together act on the valve stem until the first plunger has reached its stop in the first solenoid, whereafter the second plunger continues to act on the valve stem until the second plunger has reached its stop in the second solenoid.

2. Method according to claim 1, wherein the first solenoid (A) has a shorter stroke and greater strength that the second solenoid (B).

3. Method according to any of claims 1-2, wherein said first solenoid (A) is activated just before the engine valve reaches the valve seat, such that the closing movement is retarded.

4. Device for electrically controlling a valve actuator in a 2-stroke or 4-stroke combustion engine, where the actuator comprises a first solenoid (A) with a first plunger (5) and a second solenoid (B) with a second plunger (15), wherein the engine has at least one cylinder (1) with at least one freely controllable engine valve comprising a valve disc (10) with associated valve stem (11) and a valve spring (4) arranged to keep the valve closed, wherein air is introduced, or exhaust gases are evacuated from, a combustion chamber (3) past a lower part of the valve stem with the valve disc via at least one channel (2) in the cylinder, wherein the valve actuator is arranged activatable to open the engine valve by overcoming the force of said valve spring (4), wherein said first and second plunger are each provided with a stop defined as the position at which the force of the respective solenoid on the plunger is at its maximum, wherein the device is configured to activate both the first and the second solenoid for opening of the engine valve, wherein the plungers of the first and second solenoids are arranged to, upon activation of the first and second solenoids, act together on the valve stem until the first plunger has reached its stop in the first solenoid, whereafter the second plunger continues to act on the valve stem until the second plunger has reached its stop in the second solenoid.

5. Device according to claim 4, wherein the first solenoid (A) has a shorter stroke and greater strength that the second solenoid (B).

6. Device according to any of claims 4-5, wherein said first solenoid is activated just before the engine valve reaches the valve seat, such that the closing movement is retarded.

7. Combustion engine comprising at least one cylinder (1) with at least one freely controllable engine valve comprising a valve disc (10) with associated valve stem (11) and a valve spring (4) arranged to keep the valve closed, wherein air is introduced, or exhaust gases are evacuated from, a combustion chamber past a lower part of the valve stem with the valve disc via at least one channel (2) in the cylinder, wherein the combustion engine comprises a valve actuator comprising a first solenoid (A) with a first plunger (5) and a second solenoid (B) with a second plunger (15), wherein said solenoids (A, B) are arranged in series, wherein the valve actuator is arranged activatable to open the engine valve by overcoming the force of said valve spring (4), and wherein the combustion engine comprises a device according to any of claims 4-6.

## Patentansprüche

1. Verfahren zum elektrischen Ansteuern eines Ventilaktuators in einem 2-Takt- oder 4-Takt-Verbrennungsmotor, wobei der Aktuator einen ersten Elektromagneten (A) mit einem ersten Kolben (5) und einen zweiten Elektromagneten (B) mit einem zweiten Kolben (15) umfasst, wobei die Elektromagnete (A, B) in Reihe zueinander angeordnet sind, wobei der Motor mindestens einen Zylinder (1) mit mindestens einem frei ansteuerbaren Motorventil aufweist, das einen Ventilteller (10) mit zugeordnetem Ventilschaft (11) und eine Ventilfeder (4) umfasst, die angeordnet ist, um das Ventil geschlossen zu halten, wobei Luft über mindestens einen Kanal (2) in dem Zylinder in eine Brennkammer eingeleitet wird oder Abgase aus dieser an einem Unterteil des Ventilschafts mit dem Ventilteller vorbei abtransportiert werden, wobei der Ventilaktuator aktivierbar ist, um das Motorventil durch Überwinden der Schließkraft der Ventilfeder zu öffnen, wobei der erste und der zweite Kolben jeweils mit einem Anschlag versehen sind, der als die Position definiert ist, an der die Kraft des jeweiligen Elektromagneten auf den Kolben maximal ist, wobei das Verfahren Öffnen des Ventils durch Aktivieren sowohl des ersten als auch des zweiten Elektromagneten umfasst, sodass die Kolben des ersten und des zweiten Elektromagneten gemeinsam auf den Ventilschaft einwirken, bis der erste Kolben seinen Anschlag in dem ersten Elektromagneten erreicht hat, wonach der zweite Kolben weiter auf den Ventilschaft einwirkt, bis der zweite Kolben seinen Anschlag in dem zweiten Elektromagneten erreicht hat.

2. Verfahren nach Anspruch 1, wobei der erste Elektromagnet (A) einen kürzeren Hub und eine größere Stärke als der zweite Elektromagnet (B) aufweist.

3. Verfahren nach einem der Ansprüche 1-2, wobei der erste Elektromagnet (A) aktiviert wird, kurz bevor das Motorventil den Ventilsitz erreicht, sodass die Schließbewegung verzögert wird.

4. Vorrichtung zur elektrischen Ansteuerung eines Ventilaktuators in einem 2-Takt- oder 4-Takt-Verbrennungsmotor, wobei der Aktuator einen ersten Elektromagneten (A) mit einem ersten Kolben (5) und einen zweiten Elektromagneten (B) mit einem zweiten Kolben (15) umfasst, wobei der Motor mindestens einen Zylinder (1) mit mindestens einem frei ansteuerbaren Motorventil aufweist, das einen Ventilteller (10) mit zugeordnetem Ventilschaft (11) und eine Ventilfeder (4) umfasst, die angeordnet ist, um das Ventil geschlossen zu halten, wobei Luft über mindestens einen Kanal (2) in dem Zylinder in eine Brennkammer (3) eingeleitet wird oder Abgase aus dieser an einem Unterteil des Ventilschafts mit dem Ventilteller vorbei abtransportiert werden, wobei der Ventilaktuator aktivierbar angeordnet ist, um das Motorventil durch Überwinden der Kraft der Ventilfeder (4) zu öffnen, wobei der erste und der zweite Kolben jeweils mit einem Anschlag versehen sind, der als die Position definiert ist, an der die Kraft des jeweiligen Elektromagneten auf den Kolben maximal ist, wobei die Vorrichtung dazu konfiguriert ist, sowohl den ersten als auch den zweiten Elektromagneten zum Öffnen des Motorventils zu aktivieren, wobei die Kolben des ersten und des zweiten Elektromagneten angeordnet sind, um bei Aktivierung des ersten und des zweiten Elektromagneten gemeinsam auf den Ventilschaft einzuwirken, bis der erste Kolben seinen Anschlag in dem ersten Elektromagneten erreicht hat, wonach der zweite Kolben weiter auf den Ventilschaft einwirkt, bis der zweite Kolben seinen Anschlag in dem zweiten Elektromagneten erreicht hat.

5. Vorrichtung nach Anspruch 4, wobei der erste Elektromagnet (A) einen kürzeren Hub und eine größere Stärke als der zweite Elektromagnet (B) aufweist.

6. Vorrichtung nach einem der Ansprüche 4-5, wobei der erste Elektromagnet aktiviert wird, kurz bevor das Motorventil den Ventilsitz erreicht, sodass die Schließbewegung verzögert wird.

7. Verbrennungsmotor, umfassend mindestens einen Zylinder (1) mit mindestens einem frei ansteuerbaren Motorventil, das einen Ventilteller (10) mit einem zugeordneten Ventilschaft (11) und eine Ventilfeder (4) umfasst, die angeordnet ist, um das Ventil geschlossen zu halten, wobei Luft über mindestens einen Kanal (2) in dem Zylinder in eine Brennkammer eingeleitet wird oder Abgase aus dieser an einem Unterteil des Ventilschafts mit dem Ventilteller vorbei abtransportiert werden, wobei der Verbrennungsmotor einen Ventilaktuator umfasst, der einen ersten Elektromagneten (A) mit einem ersten Kolben (5) und einen zweiten Elektromagneten (B) mit einem zweiten Kolben (15) umfasst, wobei die Elektromagnete (A, B) in Reihe angeordnet sind, wobei der Ventilaktuator aktivierbar angeordnet ist, um das Motorventil durch Überwinden der Kraft der Ventilfeder (4) zu öffnen, und wobei der Verbrennungsmotor eine Vorrichtung nach einem der Ansprüche 4-6 umfasst.

## Revendications

1. Procédé de commande électrique d'un actionneur de soupape dans un moteur à combustion à 2 ou 4 temps, où l'actionneur comprend un premier solénoïde (A) avec un premier piston (5) et un second solénoïde (B) avec un second piston (15), dans lequel lesdits solénoïdes (A, B) sont agencés en série l'un avec l'autre, dans lequel le moteur a au moins un cylindre (1) avec au moins une soupape de moteur librement commandable comprenant un disque de soupape (10) avec une tige de soupape (11) associée et un ressort de soupape (4) agencé pour maintenir la soupape fermée, dans lequel de l'air est introduit, ou des gaz d'échappement sont évacués d'une chambre de combustion au-delà d'une partie inférieure de la tige de soupape avec le disque de soupape par l'intermédiaire d'au moins un canal (2) dans le cylindre, dans lequel l'actionneur de soupape peut être activé pour ouvrir la soupape de moteur en surmontant la force de fermeture dudit ressort de soupape, dans lequel lesdits premier et second pistons sont chacun dotés d'une butée définie comme la position à laquelle la force du solénoïde respectif sur le piston est à son maximum, dans lequel le procédé comprend l'ouverture de la soupape en activant à la fois le premier et le second solénoïde de telle sorte que les pistons des premier et second solénoïdes agissent ensemble sur la tige de soupape jusqu'à ce que le premier piston ait atteint sa butée dans le premier solénoïde, après quoi le second piston continue d'agir sur la tige de soupape jusqu'à ce que le second piston ait atteint sa butée dans le second solénoïde.

2. Procédé selon la revendication 1, dans lequel le premier solénoïde (A) a une course plus courte et une résistance plus grande que le second solénoïde (B).

3. Procédé selon l'une quelconque des revendications 1 et 2, dans lequel ledit premier solénoïde (A) est activé juste avant que la soupape de moteur n'atteigne le siège de soupape, de telle sorte que le mouvement de fermeture est retardé.

4. Dispositif de commande électrique d'un actionneur de soupape dans un moteur à combustion à 2 ou 4 temps, où l'actionneur comprend un premier solénoïde (A) avec un premier piston (5) et un second solénoïde (B) avec un second piston (15), dans lequel le moteur a au moins un cylindre (1) avec au moins une soupape de moteur librement commandable comprenant un disque de soupape (10) avec une tige de soupape (11) associée et un ressort de soupape (4) agencé pour maintenir la soupape fermée, dans lequel de l'air est introduit, ou des gaz d'échappement sont évacués d'une chambre de combustion (3) au-delà d'une partie inférieure de la tige de soupape avec le disque de soupape par l'intermédiaire d'au moins un canal (2) dans le cylindre, dans lequel l'actionneur de soupape est agencé de manière à pouvoir être activé pour ouvrir la soupape de moteur en surmontant la force dudit ressort de soupape (4), dans lequel lesdits premier et second pistons sont chacun dotés d'une butée définie comme la position à laquelle la force du solénoïde respectif sur le piston est à son maximum, dans lequel le dispositif est configuré pour activer à la fois le premier et le second solénoïde pour l'ouverture de la soupape de moteur, dans lequel les pistons des premier et second solénoïdes sont agencés pour, lors de l'activation des premier et second solénoïdes, agir ensemble sur la tige de soupape jusqu'à ce que le premier piston ait atteint sa butée dans le premier solénoïde, après quoi le second piston continue d'agir sur la tige de soupape jusqu'à ce que le second piston ait atteint sa butée dans le second solénoïde.

5. Dispositif selon la revendication 4, dans lequel le premier solénoïde (A) a une course plus courte et une résistance plus grande que le second solénoïde (B).

6. Dispositif selon l'une quelconque des revendications 4 et 5, dans lequel ledit premier solénoïde est activé juste avant que la soupape de moteur n'atteigne le siège de soupape, de sorte que le mouvement de fermeture est retardé.

7. Moteur à combustion comprenant au moins un cylindre (1) avec au moins une soupape de moteur librement commandable comprenant un disque de soupape (10) avec une tige de soupape (11) associée et un ressort de soupape (4) agencé pour maintenir la soupape fermée, dans lequel de l'air est introduit, ou des gaz d'échappement sont évacués d'une chambre de combustion au-delà d'une partie inférieure de la tige de soupape avec le disque de soupape par l'intermédiaire d'au moins un canal (2) dans le cylindre, dans lequel le moteur à combustion comprend un actionneur de soupape comprenant un premier solénoïde (A) avec un premier piston (5) et un second solénoïde (B) avec un second piston (15), dans lequel lesdits solénoïdes (A, B) sont agencés en série, dans lequel l'actionneur de soupape est agencé de manière à pouvoir être activé pour ouvrir la soupape de moteur en surmontant la force dudit ressort de soupape (4), et dans lequel le moteur à combustion comprend un dispositif selon l'une quelconque des revendications 4 à 6.
